## Europäisches Patentamt

## European Patent Office

## Office européen des brevets

(19)

(11) Veröffentlichungsnummer: **0 130 330**
**B1**

(12) **EUROPÄISCHE PATENTSCHRIFT**

(45) Veröffentlichungstag der Patentschrift:
**18.02.87**

(51) Int. Cl.⁴: **F 16 C 33/10**

(21) Anmeldenummer: **84105555.1**

(22) Anmeldetag: **16.05.84**

(54) **Radialgleitlager.**

(30) Priorität: **01.07.83 CH 3624/83**

(43) Veröffentlichungstag der Anmeldung:
**09.01.85 Patentblatt 85/2**

(45) Bekanntmachung des Hinweises auf die Patenterteilung:
**18.02.87 Patentblatt 87/8**

(84) Benannte Vertragsstaaten:
**CH DE FR GB LI**

(56) Entgegenhaltungen:
**EP - A - 0 040 981**
**CH - A - 418 064**
**DE - A - 2 359 634**
**FR - A - 770 919**
**US - A - 3 386 783**

(73) Patentinhaber: **BBC Aktiengesellschaft Brown, Boveri & Cie., Haselstrasse, CH-5401 Baden (CH)**

(72) Erfinder: **Odermatt, Robert, Dr., Ringstrasse 14, CH-8306 Brüttisellen (DE)**

## Beschreibung

Die vorliegende Erfindung betrifft ein Radialgleitlager nach dem Oberbegriff des Patentanspruchs 1.

Bei Radialgleitlagern mit hydrodynamischer Schmierung besteht auch heutzutage noch das Problem, die Schmierkeilbildung zwischen Lagerschale und Welle mit Sicherheit über den ganzen Drehzahl- und Belastungsbereich aufrechtzuerhalten und eine gute Wellenführung mit möglichst kleiner Auswanderung der Wellenachse aus der Sollage zu erreichen. Um diese Eigenschaften zu erreichen, sind Lagerschalen mit den verschiedenartigsten achsnormalen Querschnitten vorgeschlagen worden. Als einfachsten Querschnitt kennt man bei schwach belasteten Radialgleitlagern den kreisrunden mit einem derartigen Spiel gegenüber der Welle, dass sich nach Erreichen einer gewissen Umfangsgeschwindigkeit des Wellenzapfens durch hydrodynamische Wirkung ein tragfähiger Schmierkeil ausbildet, der die Gleitflächen von Welle und Lagerschale voneinander trennt. Die Lagerung befindet sich dann, nachdem sie vorher unterhalb der obenerwähnten Umfangsgeschwindigkeit den Bereich der Mischreibung zu durchlaufen hatte, im Gebiet der flüssigen Reibung oder «Schwimmreibung». Diese einfachste Gestaltung der Lagerlauffläche weist den Nachteil auf, dass sich die Wellenachse im Betrieb gegenüber der Ruhelage versetzt, und zwar umso stärker, je stärker sich der Schmierkeil ausgebildet hat. Die Anlage des Wellenzapfens an der Lagerschale ist dabei «einlinig», d.h. entlang einer Erzeugenden der Wellenzapfenoberfläche. Diesbezüglich bringt das «Zitronenspiel», bei dem die Lagerschale oder Lagerhalbschalen im Bereich ober- und unterhalb der Trennebene keilförmig erweitert sind, Abhilfe, da sich dabei im Betrieb zwei diametral gegenüberliegende Schmierkeile und damit eine zweilinige Anlage bilden. Eine Abart davon mit der gleichen Wirkung ist das «versetzte Zitronenspiel» nach Klemencic mit ebenfalls zweiliniger Anlage. Für Genauigkeitslager, wie sie etwa für die Hauptspindeln von Drehbänken, Fräsmaschinen und anderen hochbelasteten Werkzeugmaschinen erforderlich sind, gibt es Sonderkonstruktionen mit drei- und vierliniger Anlage und entsprechend drei oder vier Schmierkeilen.

Für die Schmierung der beiden zuletzt genannten Lagerbauarten verlässt man sich in der Regel nicht auf den Aufbau eines hydrodynamisch entstehenden Schmierkeils und Schmierfilms, sondern sichert die Schmierung hydrostatisch durch dauernde Zufuhr von Drucköl. Eine solche Druckumlaufschmierung gewährleistet auch, in Verbindung mit einem Ölkühler, Ölfilter usw., die Abfuhr der Lagerreibungswärme, was eine Voraussetzung für einen störungsfreien Dauerbetrieb darstellt.

Was die zwei erwähnten Lagerbauarten mit Zitronenspiel betrifft, so sind diese in der Regel, durch die Herstellungsart bedingt, zweiteilig mit horizontaler Trennebene ausgeführt. Dies bedeutet gegenüber der ersterwähnten einschaligen Bauweise mit kreiszylindrischer Bohrung eine Komplikation und Verteuerung der Herstellung, dem jedoch als Vorteil die erwähnte zweilinige Anlage und bessere Zentrierung der Wellenachse gegenüberstehen.

Noch aufwendiger sind natürlich die erwähnten Lagerbauarten mit drei- und vierliniger Anlage für höhere Ansprüche bezüglich Tragfähigkeit, zuverlässiger Schmierung und Zentrierung der Wellenachse.

Ein einstückiges Lager mit zwei-, drei- oder vierliniger Anlage ist auch aus der CH-A-418 064 bekannt. Seine Lagergleitflächen bestehen aus zwei bis vier Abschnitten von Kreiszylinderflächen, die in Umfangsrichtung durch sehr breite achsparallele Nuten, die sich, je nach Anzahl der erwähnten Abschnitte, über 30° bis ca. 100° erstrecken. Diese sollen der unbehinderten Abfuhr des Schmieröles dienen, das, in Drehrichtung des Lagerzapfens gesehen, am Anfang der erwähnten Abschnitte der Lagergleitflächen diesen über eine Bohrung und eine achsparallele Schmiernut unter Druck zugeführt wird. Angaben über die spezielle Eignung dieser Lagerbauart werden ebensowenig gemacht wie über ihre Vorteile. Einen offensichtlichen Nachteil für die Herstellung stellen aber die breiten, achsparallelen Nuten zwischen den Abschnitten der Lagergleitflächen dar, da diese bei grösseren Lagerdurchmessern durch aufwendiges Zerspanen, beispielsweise durch Räumwerkzeuge, erzeugt werden müssen. Dies gilt zumindest für gewalzte Rohre als Ausgangsmaterial. Bei Verwendung gegossener Rohre mit genutetem Querschnitt können die Nuten zwar unbearbeitet bleiben, Lunker im Bereich der Lagergleitflächen können aber die Brauchbarkeit der Lager beeinträchtigen oder zu Ausschuss führen. Für kleinere Lagerdurchmesser könnten wohl dem Lagerquerschnitt entsprechend profilierte, gezogene Rohre als Ausgangsmaterial dienen, doch bliebe dann wegen der einstückigen Bauweise die Schwierigkeit der Herstellung der achsparallel verlaufenden Schmiernuten in Randnähe der Lagergleitflächen. Da diese Schmiernuten an den Lagerstirnflächen geschlossen sind, können sie beim Ziehvorgang nicht mitgeformt werden, sondern müssen auf unwirtschaftliche Weise spanabhebend herausgearbeitet werden.

Die vorliegende, im Patentanspruch 1 definierte Erfindung entstand aus der Aufgabe, ein vollumschlossenes Radialgleitlager zu schaffen, das gegenüber einem vollumschlossenen Radialgleitlager gleicher Grösse mit kreiszylindrischer Bohrung höhere Tragfähigkeit, verbesserte Stabilitätseigenschaften bei schwacher Belastung und hoher Drehzahl sowie kleinere Reibungsverlustleistung bei grossen Wellendurchmessern und hohen Drehzahlen aufweisen soll. Den anderen in der Einleitung beschriebenen Bauarten von Radialgleitlagern soll es bezüglich der vorerwähnten Laufeigenschaften zumindest nicht nachstehen, darüber hinaus aber universeller verwendbar sein, einfacheren Aufbau aufweisen und billiger herzustellen sein, indem der achsnormale Lagerquerschnitt rein durch spanabhebende Operationen auf einer Drehbank erzeugbar sein soll.

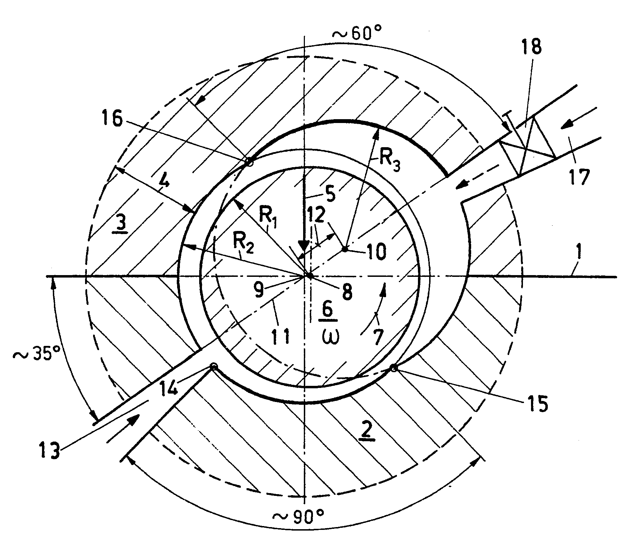

Im folgenden wird die Erfindung anhand der in der einzigen Figur dargestellten geometrischen Bestimmungsstücke des achsnormalen Querschnittes der Lagerbohrung näher erläutert.

Die schematisch vereinfacht dargestellten materiellen Teile des Radialgleitlagers, das sind eine unterhalb einer horizontalen Trennebene 1 liegende Tragschale 2 und eine darüber liegende Oberschale 3, bestehen mit einer der Gewichtsbelastung des Lagers entsprechenden Schalenstärke 4 vorzugsweise aus Weissmetall. Die senkrechte Gewichtsbelastung wird durch einen Gewichtspfeil 5 dargestellt. Den Drehsinn einer Welle 6 gibt ein Drehrichtungspfeil 7 an, die Winkelgeschwindigkeit der Welle ist $\omega$, ihr Radius $R_1$ und der Mittelpunkt ihres Querschnitts ist mit 8 bezeichnet.

Die Lagergleitfläche der Tragschale 2 wird zum überwiegenden Teil von einer Zylinderfläche begrenzt, deren Querschnitt ein Kreis mit dem Mittelpunkt 9 und dem Radius $R_2$ ist. Den restlichen Teil der Lagergleitfläche der Tragschale 2 begrenzt eine Zylinderfläche, deren Querschnitt ein Kreis mit dem Mittelpunkt 10 und dem Radius $R_3$ ist. $R_3$ ist gleich $R_2$ und der Mittelpunkt 10 ist auf einer Diametralen 11 um die Strecke $12 = 2 (R_2 - R_1)$, d.h., um das doppelte Lagerspiel der Tragschale 2, nach rechts oben verschoben. Die Diametrale 11 ist gegenüber der horizontalen Trennebene 1 um ca. 35° geneigt. Um etwa den gleichen Winkel gegenüber der Horizontalen in der Drehrichtung versetzt ist eine Ölzufuhrbohrung 13 vorgesehen, von deren Einmündung in den Lagerspalt der Tragschale 2 aus gesehen sich im Betrieb ein konvergenter Schmierkeil über einen Bogen von ca. 90°, in der Drehrichtung der Welle gesehen, erstreckt. Diesem Bogen entspricht in der Lagergleitfläche der Tragschale 2 die Strecke vom Punkt 14, dem zuunterst gelegenen Punkt der Einmündung der Ölzufuhrbohrung 13 in die Lagerbohrung der Tragschale 2, bis zum unteren Kreuzungspunkt 15 der beiden Kreise mit den Radien $R_2$ bzw. $R_3$. Durch die erwähnte Versetzung der Ölzufuhrbohrung erhält man also eine bezüglich der Lastrichtung symmetrisch liegende Lagergleitfläche über einen Bogen von ca. 90°. Das Lagerspiel in der Tragschale 2 ist nach den Grundsätzen der Hydrodynamik optimiert.

Ein Teil des oben erwähnten Kreiszylinders mit dem Radius $R_3$ bildet den überwiegenden Teil der Lagergleitfläche der Oberschale 3, und zwar bis zum Schnittpunkt 16 der beiden Kreise mit $R_3$ bzw. $R_2$. Der restliche Teil der Lagergleitfläche der Oberschale wird von einem Teil der Kreiszylinderfläche mit dem Radius $R_2$ gebildet.

Für die Ölzuführung in der Oberschale ist eine Ölzuführbohrung 17 vorgesehen, die gegenüber der Waagrechten ebenso wie die untere Ölzuführbohrung 13 um ca. 35° in der Drehrichtung der Welle versetzt ist, so dass von der Einmündung der Ölzuführbohrung in die Lagerbohrung aus bis zum Punkt 16 ein konvergenter Spalt über einen Bogen von ca. 60° resultiert. In der Ölzuführbohrung 17 ist ein Drosselelement 18 in Form eines Hahnes, Ventils oder dgl. vorgesehen, mit dem die Ölzufuhr teilweise oder ganz unterbunden werden kann, falls die Lagerbelastung genügend hoch ist, um ein Anheben der Welle zu verhindern, oder falls die Laufruhe damit nicht beeinträchtigt wird.

Falls es die Lagerzapfen der Welle erlauben, z.B. bei fliegender Lagerung oder Transmissionswellen mit durchgehend gleichem Durchmesser, kann das Lager als einstückige, geschlossene Schale ohne Trennebene ausgeführt werden. Beim Ausbohren der Lagergleitfläche mit rotierender Bohrstange ist die Herstellung in einer einzigen Aufspannung möglich. Beim Ausbohren auf einer Drehbank genügt es, nach Herstellung der einen Bohrung, z.B. mit $R_2$, das Lager um die Strecke 9–10 gegenüber der ersten Aufspannung zu verschieben und die Bohrung mit $R_3$ auszuführen. Zeitraubende manuelle Arbeitsschritte bzw. Umspannungen, wie teilweise bei der Herstellung der eingangs erwähnten Lager erforderlich, fallen bei der vorliegenden Bauart daher weg.

Experimente haben die Eigenschaften bestätigt, welche durch die aufgrund theoretischer hydrodynamischer Überlegungen entwickelte Geometrie der Lagerbohrung angestrebt wurden, namentlich hohe Betriebssicherheit, Reduktion der Reibleistung, gute Stabilitätseigenschaften bei schwacher Belastung und hoher Drehzahl sowie hohe Tragfähigkeit auch bei niedrigen Drehzahlen. Dazu kommt als wirtschaftlicher Vorteil die einfache Herstellung der Lagergleitfläche.

## Patentansprüche

1. Radialgleitlager, mit einer Lagerbohrung, deren Lagergleitfläche Flächenteile zur hydrodynamischen Schmierkeilbildung sowie Elemente zur Schmierölzuführung aufweist, wobei die Lagergleitfläche sich aus Flächenteilen (16, 15; 15, 16) zweier Kreiszylinder zusammensetzt, deren Achsen (Spuren in einer achsnormalen Ebene = 9 bzw. 10) mit Abstand (12) voneinander in einer Diametralebene (Spur in einer achsnormalen Ebene = 11) liegen, wobei die Flächenteile (16, 15; 15, 16) die Schmierkeilbildung bewirken, und wobei unter- und oberhalb einer zur Lastrichtung (Gewichtspfeil 5) rechtwinkligen Ebene (1) durch die Lagerachse (9) zumindest je eine Ölzuführbohrung (13; 17) vorgesehen ist, deren Einmündungen in die Lagerbohrung unter einem Winkel von mindestens annähernd 35° im Drehsinn der Welle (6) gegenüber der genannten Ebene (1) versetzt sind, dadurch gekennzeichnet, dass die Radien ($R_2$; $R_3$) der Kreiszylinder (Spuren der Achsen = 9 bzw. 10) gleich gross sind, dass der Abstand (12) der Achsen dieser Kreiszylinder gleich ist dem doppelten Lagerspiel $[ = 2 (R_2 - R_1)$, worin $R_1$ = Radius der Welle], und dass in einer Ölleitung vor der Ölzuführbohrung (17), die oberhalb der genannten Ebene (1) angeordnet ist, eine verstellbare Drossel (18) vorgesehen ist.

2. Radialgleitlager nach Anspruch 1, dadurch gekennzeichnet, dass es durch eine horizontale Trennebene in eine Tragschale (2) und eine Oberschale (3) geteilt ist.

3. Radialgleitlager nach Anspruch 1, dadurch gekennzeichnet, dass es einstückig ausgeführt ist.

## Claims

1. Sliding journal bearing, having a bearing bore whose bearing sliding surface has surface parts for hydrodynamic lubricating wedge formation and elements for lubricating oil supply, wherein the bearing sliding surface is composed of surface parts (16, 15; 15, 16) of two circular cylinders whose axes (traces in a plane normal to the axis = 9 and 10) are located with a mutual distance apart (12) in a diametral plane (trace in a plane normal to the axis = 11), wherein the surface parts (16, 15; 15, 16) effect the lubricating wedge formation and wherein at least one oil supply hole (13; 17) each is provided below and above a plane (1) through the bearing axis (9) at right angles to the load direction (weight arrow 5), their entries into the bearing bore being displaced by an angle of at least approximately 35° in the direction of rotation of the shaft (6) relative to the plane mentioned (1), characterized in that the radii $(R_2; R_3)$ of the circular cylinders (traces of the axes = 9 and 10) are equally large, that the distance (12) between the axes of these circular cylinders is equal to twice the bearing clearance [= 2 $(R_2 - R_1)$ where $R_1$ = radius of the shaft], and that an adjustable throttle (18) is provided in an oil conduit in front of the oil supply hole (17) which is located above the plane mentioned (1).

2. Sliding journal bearing according to claim 1, characterized in that it is split by a horizontal split plane into a support shell (2) and an upper shell (3).

3. Sliding journal bearing according to claim 1, characterized in that it is produced in one piece.

## Revendications

1. Palier lisse radial, avec un alésage dont la surface de glissement présente des parties de surface destinées à la formation hydrodynamique d'un coin de lubrifiant ainsi que des éléments pour l'introduction d'huile de lubrification, dans lequel la surface de glissement se compose de parties de surface (16, 15; 15, 16) de deux cylindres circulaires, dont les axes (traces dans un plan normal à l'axe = 9, resp. 10) se trouvent dans un plan diamétral (trace dans un plan normal à l'axe = 11) et sont séparés par une distance (12), dans lequel les parties de surface (16, 15; 15, 16) provoquent la formation du coin de lubrifiant, et dans lequel, en dessous et au-dessus d'un plan (1) perpendiculaire à la direction de la charge (flèche 5) et passant par l'axe du palier (9), il est prévu au moins un orifice (13; 17) d'alimentation en huile dont les embouchures dans l'alésage sont décalées d'un angle d'au moins environ 35° dans le sens de rotation de l'arbre (6) par rapport au plan (1) précité; caractérisé en ce que les rayons $(R_2; R_3)$ des cylindres circulaires (traces des axes = 9, resp. 10) sont égaux, en ce que la distance (12) séparant les axes de ces cylindres circulaires est égale ou double du jeu du palier [= 2 $(R_2 - R_1)$, où $R_1$ = rayon de l'arbre], et en ce qu'il est prévu un étranglement (18) réglable dans une conduite d'huile en amont de l'orifice (17) d'alimentation en huile qui est situé au-dessus du plan (1) précité.

2. Palier lisse radial suivant la revendication 1, caractérisé en ce qu'il est séparé en un coussinet porteur (2) et un coussinet supérieur (3) par un plan de séparation horizontal.

3. Palier lisse radial suivant la revendication 1, caractérisé en ce qu'il est réalisé en une seule pièce.